# EUROPÄISCHE PATENTSCHRIFT

(11) **EP 3 053 859 B1**
(45) Veröffentlichungstag und Bekanntmachung des Hinweises auf die Patenterteilung: **30.08.2017**
(21) Anmeldenummer: 16000208.5
(22) Anmeldetag: 28.01.2016
(51) Int. Cl.: B65G 47/24, B65G 47/30, B65G 11/02

(54) **VORRICHTUNG ZUM VEREINZELN UND AUSRICHTEN VON BEFESTIGUNGSMITTELN**
DEVICE FOR SEPARATING AND ALIGNING ATTACHMENT MEANS
DISPOSITIF DE SEPARATION ET D'ALIGNEMENT DE MOYEN DE FIXATION

(30) Priorität: 05.02.2015 DE 102015001320
(43) Veröffentlichungstag der Anmeldung: 10.08.2016
(73) Patentinhaber: Stöger, Lorenz, 82549 Königsdorf (DE)
(72) Erfinder: Kornelsen, Artur, 82515 Wolfratshausen (DE); Stöger, Lorenz, 82549 Königsdorf (DE)
(74) Vertreter: Flosdorff, Jürgen

(56) Entgegenhaltungen:
- WO-A1-2007/068129
- DE-A1- 2 023 018
- JP-A- S58 216 817

## Beschreibung

Die Erfindung betrifft eine Vorrichtung zum Vereinzeln und Ausrichten von mit Kopf und Schaft versehenen, vorzugsweise schaftlastigen Befestigungsmitteln wie Schrauben, Nieten, Nägeln und Bolzen gemäß dem Oberbegriff des Patentanspruchs 1.

Die Erfindung wird nachfolgend vor allem im Zusammenhang mit dem Vereinzeln und Ausrichten von Schrauben beschrieben.

Bekannte Vorrichtungen der betrachteten Art enthalten beispielsweise einen Vibrationstopf oder einen Rotationstopf, der mit einer großen Anzahl von unsortierten Schrauben befüllt wird, die einzeln infolge Vibration oder Rotation zu einem Auslass wandern und in eine Zuführeinheit eines Schraubgeräts fallen. Dabei können die Schrauben über längere Zeit in dem Topf umlaufen und durch Reibung aneinander beschädigt werden, bevor sie den Topf verlassen. Dabei können sich beispielsweise Späne von dem Gewinde lösen, oder im Falle von beschichteten Schrauben kann die Beschichtung beschädigt werden, so dass einzelne Schrauben nach dem Sortieren und Vereinzeln in dem Topf unbrauchbar werden. Es ist auch möglich, dass einzelne Schrauben immer wieder in dem Topf umlaufen und diesen praktisch nicht verlassen.

Neben einer möglichen Beschädigung der Schrauben in den bekannten Vereinzelungsvorrichtungen haben diese den Nachteil, dass die Sortierleistung, d.h. die einzelnen Abgaben der Schrauben aus dem Vibrationstopf oder Rotationstopf, gering ist. Die WO2007/068129 A1 offenbart eine Vorrichtung zum Ausrichten von Stückgütern, insbesondere von Vorformlingen, mit der auch Schrauben vereinzelt und ausgerichtet werden können, mit den Merkmalen des Oberbegriffs des Patentanspruchs 1. Bei dieser Vorrichtung werden die Stückgüter ungeordnet in einen Einfüllbehälter gefüllt und dort einzeln von einem Steigförderer entnommen und einer Gleitbahneinrichtung zum Vereinzeln und Ausrichten der Stückgüter zugeführt. Wenn es sich bei den Stückgütern um Schrauben, Nieten, Nägeln oder Bolzen handelt, können sich diese in dem Einfüllbehälter stellenweise miteinander verhaken, so dass sie nicht oder nicht einzeln in den Steigförderer gelangen, wodurch die Abgabe der Schrauben etc. aus dem Einfüllbehälter ins Stocken geraten kann und die Sortierleistung unzureichend wird.

Der vorliegenden Erfindung liegt die Aufgabe zugrunde, eine Vorrichtung anzugeben, bei der die Schrauben beim Vereinzeln und Ausrichten schonender behandelt werden, so dass sie praktisch nicht beschädigt werden können. Dies soll ebenfalls bei der Handhabung von Nieten, Nägeln, Bolzen etc. der Fall sein, bei denen bisher z.B. eine Beschichtung beschädigt werden konnte. Außerdem soll die Vorrichtung eine hohe Sortierleistung haben, so dass sie nicht nur als Teil eines Zuführsystems für Befestigungsmittel eines Setzgerätes wie eines Schraubgerätes geeignet ist, sondern auch beispielsweise zum Prüfen, Zählen und Abpacken einer größeren Anzahl von Befestigungsmitteln.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass eine Beschickungseinrichtung mit wenigstens einem Förderband unsortierte Befestigungsmittel transportiert, die - ohne die Möglichkeit, wieder in den Schüttgutbereich zurück zu fallen - auf eine darunter angeordnete, in Längsrichtung geneigte Gleitbahneinrichtung fallen, die wenigstens eine im wesentlichen V-förmige Führungsschiene mit einem mittigen longitudinalen Spalt aufweist, der breiter als der Schaft und schmaler als der Kopf der Befestigungsmittel ist. Auf der schrägen Gleitbahneinrichtung rutschen die zunächst unsortiert einfallenden Befestigungsmittel in der querschnittlich im wesentlichen V-förmigen Führungsschiene zu deren mittigen Bodenbereich, wodurch sie in Längsrichtung der Führungsschiene ausgerichtet werden, so dass ihr Schaft im Bereich des mittigen longitudinalen Spaltes durch diesen Spalt schwenken kann, so dass die Befestigungsmittel mit ihren Köpfen in der im wesentlichen V-förmigen Führungsschiene gehalten und mit herab hängendem Schaft aufgereiht werden. Auf diese Weise werden die Befestigungsmittel in der Gleitbahneinrichtung vereinzelt und ausgerichtet, so dass sie beispielsweise einzeln in ein Zuführsystem eintreten können, das die Schrauben nacheinander dem Schraubkopf eines Schraubgerätes zuführt.

Die Gleitbahneinrichtung kann geradlinig, kurvenförmig oder auch kreisbogenförmig verlaufen.

Die so aufgereihten und ausgerichteten Befestigungsmittel können auch beispielsweise durch Sensoren auf ihre Maßhaltigkeit geprüft oder gezählt werden, wobei sie am Ende der Gleitbahneinrichtung beispielsweise auch verpackt werden können.

Da die Beschickungseinrichtung mittels wenigstens eines Förderbandes jeweils eine größere Anzahl von unsortierten Befestigungsmitteln der geneigten Gleitbahneinrichtung zuführt, wird jedes Befestigungsmittel sofort auf der Gleitbahneinrichtung sortiert, was eine hohe Sortiergeschwindigkeit ermöglicht. Im Vergleich hierzu befinden sich die Befestigungsmittel beim Stand der Technik in einem u.U. langen Umlauf, bevor sie vereinzelt werden.

Außerdem ist erfindungsgemäß vorgesehen, dass die Beschickungseinrichtung bevorzugt zwei Förderbänder aufweist, wobei ein erstes Förderband mit seinem in Transportrichtung vorderen Rand über einem zweiten Förderband angeordnet ist, das bevorzugt quer zu dem ersten Förderband verläuft. Das erste Förderband ist von seitlichen Wänden umgeben und bildet einen sogenannten Bandbunker, in den zahlreiche Befestigungsmittel als Schüttgut eingefüllt werden. Auf dem darunter angeordneten zweiten Förderband ist mit großem Vorteil ein streifenförmiger, sich in Transportrichtung erstreckender Bereich durch zwei seitliche Wände abgegrenzt, derart, dass auf diesen streifenförmigen Bereich die unsortierten Befestigungsmittel aus dem Bandbunker fallen. Die Laufgeschwindigkeiten der beiden Förderbänder sind durch eine Steuereinrichtung so einstellbar, dass der Gleitbahneinrichtung so viele Befestigungsmittel zugeführt werden, dass sie in der Gleitbahneinrichtung vereinzelt und ausgerichtet werden können.

Die Gleitbahneinrichtung hat wenigstens eine im wesentlichen V-förmige Führungsschiene mit dem oben erwähnten mittigen longitudinalen Spalt. Diese mit dem Spalt versehene Führungsschiene kann unterhalb des in Transportrichtung vorderen Randes des abgegrenzten Bereichs des zweiten Förderbandes angeordnet sein. Bevorzugt ist jedoch, dass die Befestigungsmittel zunächst auf eine geneigte, etwa V-förmige Führungsschiene fallen, deren Boden geschlossen ist. In dieser Führungsschiene rutschen die Befestigungsmittel zum tiefsten Bereich der V-förmigen Führungsschiene und werden dabei in Längsrichtung der Gleitbahn ausgerichtet. Dabei sind die meisten Befestigungsmittel schon vereinzelt, jedoch können sie sich auch noch teilweise überlappen.

An diese optional vorgesehene erste, am Boden geschlossene etwa V-förmige Führungsschiene schließt die oben erwähnte, mit dem mittigen longitudinalen Spalt versehene Führungsschiene an, die unterhalb des in Gleitrichtung vorderen Endes der ersten Führungsschiene angeordnet ist und einen anderen, einstellbaren Neigungswinkel zur Horizontalen haben kann. In dieser Führungsschiene schwenkt der Schaft der Befestigungsmittel durch den Spalt nach unten, wobei der Kopf, der breiter als der longitudinale Spalt ist, in der Führungsschiene gehalten ist. Auf diese Weise werden die Befestigungsmittel einzeln aufgereiht, wobei sie im Bereich dieser Führungsschiene noch eine Pendelbewegung ausführen können.

Die Breite des Spalts ist ebenso einstellbar wie der Öffnungswinkel der im wesentlichen V-förmigen Führungsschienen und deren Position zueinander.

Nach einem weiteren Vorschlag der Erfindung kann sich an dem vorderen Ende der mit dem Spalt versehenen im wesentlichen V-förmigen Führungsschiene eine weitere Schiene auf gleicher Höhe anschließen, die zwei parallele Wände aufweist, auf deren Oberkanten die Befestigungsmittel mit ihrem Kopf gleiten. In dieser Beruhigungsstrecke gleiten die Befestigungsmittel ohne Pendelbewegung glatt abwärts, bevor sie am Ende dieser Beruhigungsstrecke durch einen Anschlag arretiert werden. Der letzte Abschnitt der Beruhigungsstrecke bildet eine Pufferstrecke, wenn sich eine Zuführeinrichtung anschließt, die beispielsweise Schrauben einzeln dem Schraubkopf eines Schraubgerätes zuführt.

Durch Sensoren kann überwacht werden, wieviele Befestigungsmittel sich in der Pufferstrecke befinden. In Abhängigkeit von der gewünschten Anzahlt steuert die Steuereinrichtung der Vorrichtung die Laufgeschwindigkeit der beiden Förderbänder.

Es versteht sich, dass die querschnittlich im wesentlichen V-förmigen Führungsschienen keine geradlinigen Seitenflächen haben müssen, sondern diese können auch auf zweckmäßige Weise gewölbt und/oder abgewinkelt sein. Dabei ist wichtig, dass die im freien Fall zugeführten Befestigungsmittel in den Führungsrinnen schnell und sicher zur Mitte rutschen und in Längsrichtung ausgerichtet werden.

Die Bestandteile der Gleitbahneinrichtung bestehen vorzugsweise aus einem Metallblech, wobei aber auch ein harter, glatter Kunststoff verwendet werden kann.

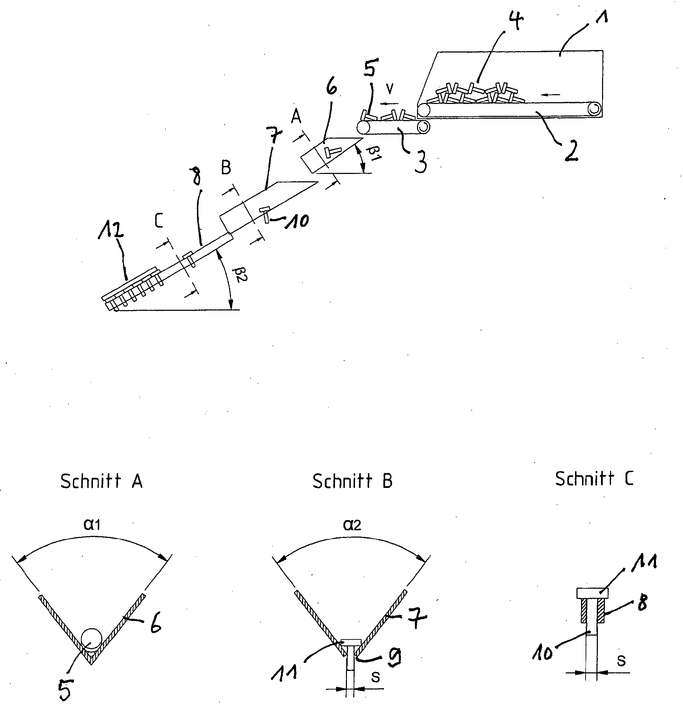

Weitere Einzelheiten der Erfindung ergeben sich aus der beigefügten Zeichnung sowie anhand der zugehörigen Beschreibung. Dabei zeigt die rein schematische Darstellung eine Ausführungsform der erfindungsgemäßen Vorrichtung mit Querschnitten durch die drei Führungsschienen.

Die Figur zeigt rein schematisch die Bestandteile einer Vorrichtung zum Vereinzeln und Ausrichten von Schrauben, wobei die Tragkonstruktion weggelassen ist, die die einzelnen Elemente hält. In der obersten Position ist ein sogenannter Bandbunker 1 angeordnet, der ein erstes Förderband 2 enthält, das von drei Seitenwänden umgeben ist. Die Laufrichtung des Förderbandes 2 sowie auch des zweiten Förderbandes 3 ist durch Pfeile angezeigt.

Auf das Förderband 2 werden als Schüttgut 4 unsortierte Schrauben 5 geschüttet, die an dem in Laufrichtung vorderen Rand des Förderbandes 2 auf das darunter angeordnete zweite Förderband 3 fallen. Das Förderband 2 läuft langsamer als das Förderband 3, wobei die Geschwindigkeiten von einer Steuereinrichtung gesteuert werden. Die Förderbänder können auch intermittierend laufen.

Anders als in der schematischen Zeichnung dargestellt, sind die beiden Förderbänder 2, 3 in einer bevorzugten Ausführungsform quer zueinander angeordnet, und die Schrauben 5 fallen in einen durch Seitenwände abgegrenzten streifenförmigen Bereich, der mit den Führungsschienen 6, 7 und 8 fluchtet.

Die Schrauben 5 fallen vom vorderen Rand des Förderbandes 3 in eine V-förmige Führungsschiene 6, die auch als Trichter bezeichnet werden kann. Wie der Schnitt A zeigt, hat die V-förmige Führungsschiene 6 einen geschlossenen Boden, an den sich die Schrauben 5 anlegen, die damit in Längsrichtung der Führungsschienen ausgerichtet werden. Die Führungsschiene 6 ist in einem Winkel β1 zur Horizontalen an der Haltekonstruktion befestigt.

Die so in Längsrichtung ausgerichteten Schrauben 5 fallen am unteren Ende der Führungsschiene 6 in eine weitere V-förmige Führungsschiene 7, die einen mittigen longitudinalen Spalt 9 enthält, der etwas breiter als der Schaft der Schrauben 5, jedoch schmaler als deren Kopf ist. Die Schrauben 5 schwenken beim Gleiten entlang der Führungsschiene 7 mit ihrem Schaft 10 durch den Spalt 9 und werden mit ihrem Kopf 11 oberhalb des Spalts 9 in der Führungsschiene gehalten.

An die V-förmige Führungsschiene 7 schließt sich eine aus zwei seitlichen parallelen Wänden bestehende Führungsschiene 8 an, auf deren Oberkanten der Kopf 11 der Schrauben 5 gleitet, wobei der Abstand zwischen den beiden Seitenwänden der Führungsschiene 8 etwas größer ist als die Dicke des Schafts 10. Während die V-förmige Führungsschiene 7 eine Einfädelstrecke für die Schrauben 5 bildet, auf der die Schrauben 5 eine Pendelbewegung ausführen können, bildet die Führungsschiene 8 eine Beruhigungsstrecke, auf der die Schrauben 5 glatt - ohne Pendelbewegung - entlang gleiten. Am Ende der Führungsschiene 8 befindet sich ein Anschlag, der die Schrauben 5 einzeln frei gibt, so dass diese beispielsweise dem Schraubkopf eines Schraubgeräts zugeführt werden können. Vor dem Anschlag bilden die Schrauben 5 eine Pufferstrecke, in der die Schraubenköpfe aneinander anliegen. Die Länge der jeweiligen Pufferstrecke kann zur Steuerung der Laufgeschwindigkeit der Förderbänder 2 und 3 heran gezogen werden.

## Patentansprüche

1. Vorrichtung zum Vereinzeln und Ausrichten von mit Kopf und Schaft versehenen Befestigungsmitteln wie Schrauben, Nieten, Nägeln, Bolzen,
mit einer Beschickungseinrichtung zum Transportieren von unsortierten Befestigungsmitteln (5) und einer darunter angeordneten geneigten Gleitbahneinrichtung (6, 7, 8) zum Vereinzeln und Ausrichten der von der Beschickungseinrichtung gefallenen Befestigungsmittel (5), wobei die Gleitbahneinrichtung wenigstens eine im wesentlichen V-förmige Führungsschiene (7) mit einem mittigen longitudinalen Spalt (9) aufweist, der breiter als der Schaft (10) und schmaler als der Kopf (11) der Befestigungsmittel (5) ist,
**dadurch gekennzeichnet,**
**dass** die Beschickungseinrichtung zwei Förderbänder (2,3) aufweist, wobei ein erstes Förderband (2) mit seinem in Transportrichtung vorderen Rand über einem zweiten Förderband (3)angeordnet ist, das quer zu dem ersten Förderband (2) verläuft.

2. Vorrichtung nach Anspruch 1,
**dadurch gekennzeichnet,**
**dass** auf dem zweiten Förderband (3) durch seitliche Wände ein streifenförmiger, sich in Transportrichtung erstreckender Bereich abgegrenzt ist, auf den die unsortierten Befestigungsmittel (5) fallen.

3. Vorrichtung nach den Ansprüchen 1 oder 2,
**dadurch gekennzeichnet,**
**dass** die geneigte Gleitbahneinrichtung eine etwa V-förmige Führungsschiene (6) aufweist, die unterhalb des in Transportrichtung vorderen Randes des abgegrenzten Bereichs des zweiten Förderband (3) angeordnet ist.

4. Vorrichtung nach Anspruch 3,
**dadurch gekennzeichnet,**
**dass** der Boden der etwa V-förmigen Führungsschiene (6) geschlossen ist.

5. Vorrichtung nach den Ansprüchen 1 bis 4,
**dadurch gekennzeichnet,**
**dass** unterhalb des in Gleitrichtung vorderen Endes der Führungsschiene (6) eine weitere geneigte, etwa V-förmige Führungsschiene (7) angeordnet ist, die einen mittigen longitudinalen Spalt (9) aufweist, der breiter als der Schaft (10) und schmaler als der Kopf (11) der Befestigungsmittel (5) ist.

6. Vorrichtung nach den Ansprüchen 1 oder 5,
**dadurch gekennzeichnet,**
**dass** die Breite des Spalts (9) einstellbar ist.

7. Vorrichtung nach den Ansprüchen 1 bis 6,
**dadurch gekennzeichnet,**
**dass** an dem vorderen Ende der weiteren im wesentlichen V-förmigen Führungsschiene (7) eine zwei parallele Wänden aufweisende geneigte Führungsschiene (8) glatt anschließt, wobei die Befestigungsmittel (5) mit ihrem Kopf (1) auf den Oberkanten der Wände gleiten.

8. Vorrichtung nach den Ansprüchen 1 bis 7,
**dadurch gekennzeichnet,**
**dass** die Neigung der Führungsschienen (6, 7, 8) einstellbar ist.

9. Vorrichtung nach den Ansprüchen 1 bis 8,
**dadurch gekennzeichnet,**
**dass** die Vorrichtung Teil eines Zuführsystems für Befestigungsmittel eines Setzgerätes, vorzugsweise für Schrauben eines Schraubgerätes ist.

## Claims

1. Apparatus for separating and aligning fastening means, such as screws, rivets, nails and bolts, with a head and a shaft including a charging device for transporting unsorted fastening means (5) and an inclined slideway device (6, 7, 8) arranged beneath it for separating and aligning the fastening means (5) fallen from the charging device, wherein the slideway device includes at least one substantially V-shaped guide track (7) with a central, longitudinal gap (9), which is wider than the shaft (10) and narrower than the head (11) of the fastening means (5), **characterised in that** the charging device includes two conveyor belts (2, 3), wherein a first conveyor belt (2) is arranged with its front edge, in the transport direction, above a second conveyor belt (3), which extends transversely to the first conveyor belt (2).

2. Apparatus as claimed in Claim 1, **characterised in that** defined on the second conveyor belt (3) by lateral walls there is a strip-shaped region, which extends in the transport direction and on which the unsorted fastening means (5) fall.

3. Apparatus as claimed in Claims 1 or 2, **characterised in that** the inclined slideway device includes an approximately V-shaped guide track (6), which is arranged below the front edge, in the transport direction, of the defined region of the second conveyor belt (3).

4. Apparatus as claimed in Claim 3, **characterised in that** the base of the approximately V-shaped guide track (6) is closed.

5. Apparatus as claimed in Claims 1 to 4, **characterised in that** arranged below the front end, in the sliding direction, of the guide track (6) there is a further, inclined, approximately V-shaped guide track (7), which has a central longitudinal gap (9), which is wider than the shaft (10) and narrower than the head (11) of the fastening means (5).

6. Apparatus as claimed in Claims 1 or 5, **characterised in that** the width of the gap (9) is adjustable.

7. Apparatus as claimed in Claims 1 to 6, **characterised in that** smoothly adjoining the front end of the further substantially V-shaped guide track (7) there is an inclined guide track (8) affording two parallel walls, wherein the fastening means (5) slide with their head (1) on the upper edges of the walls.

8. Apparatus as claimed in Claims 1 to 7, **characterised in that** the inclination of the guide tracks (6, 7, 8) is adjustable.

9. Apparatus as claimed in Claims 1 to 8, **characterised in that** the apparatus is part of a supply system for fastening means of a positioning device, preferably for screws of a screwing device.

## Revendications

1. Dispositif pour séparer et aligner des moyens de fixation munis d'une tête et d'une tige tels des vis, des rivets, des clous, des boulons,
avec une installation de chargement pour transporter des moyens de fixation (5) non triés et une installation de glissière (6, 7, 8) inclinée disposée en dessous de celle-ci pour séparer et aligner les moyens de fixation (5) tombés de l'installation de chargement, dans lequel l'installation de glissière présente au moins un rail de guidage (7) sensiblement en forme de V avec un écartement (9) central longitudinal qui est plus large que la tige (10) et plus étroit que la tête (11) des moyens de fixation (5),
**caractérisé en ce**
**que** l'installation de chargement présente deux bandes transporteuses (2, 3), dans lequel une première bande transporteuse (2) est disposée avec son bord avant en direction de transport au-dessus d'une deuxième bande transporteuse (3) qui s'étend transversalement à la première bande transporteuse (2).

2. Dispositif selon la revendication 1,
**caractérisé en ce**
**que**, sur la deuxième bande transporteuse (3), une zone en forme de bande s'étendant en direction de transport est délimitée par des parois latérales, sur laquelle zone tombent les moyens de fixation (5) non triés.

3. Dispositif selon les revendications 1 ou 2,
**caractérisé en ce**
**que** l'installation de glissière inclinée présente un rail de guidage (6) à peu près en forme de V qui est disposé en dessous du bord avant en direction de transport de la zone délimitée de la deuxième bande transporteuse (3).

4. Dispositif selon la revendication 3,
**caractérisé en ce**
**que** le fond du rail de guidage (6) à peu près en forme de V est fermé.

5. Dispositif selon les revendications 1 à 4,
**caractérisé en ce**
**qu'**en dessous de l'extrémité avant en direction de glissement du rail de guidage (6) est disposé un autre rail de guidage (7) incliné à peu près en forme de V qui présente un écartement (9) central longitudinal qui est plus large que la tige (10) et plus étroit que la tête (11) des moyens de fixation (5).

6. Dispositif selon les revendications 1 ou 5,
**caractérisé en ce**
**que** la largeur de l'écartement (9) est réglable.

7. Dispositif selon les revendications 1 à 6,
**caractérisé en ce**
**qu'**au niveau de l'extrémité avant de l'autre rail de guidage (7) sensiblement en forme de V, un rail de guidage (8) incliné présentant deux parois parallèles est en jonction lisse, dans lequel les moyens de fixation (5) glissent avec leur tête (1) sur les bords supérieurs des parois.

8. Dispositif selon les revendications 1 à 7,
**caractérisé en ce**
**que** l'inclinaison des rails de guidage (6, 7, 8) est réglable.

9. Dispositif selon les revendications 1 à 8,
**caractérisé en ce**
**que** le dispositif fait partie d'un système d'amenée pour des moyens de fixation d'un appareil de pose, de préférence pour des vis d'un appareil de vissage.
